# EUROPÄISCHE PATENTSCHRIFT

(11) **EP 2 510 128 B1**
(45) Veröffentlichungstag und Bekanntmachung des Hinweises auf die Patenterteilung: **20.02.2019**
(21) Anmeldenummer: 10798527.7
(22) Anmeldetag: 08.12.2010
(51) Int. Cl.: C21D 7/12, C21D 8/10, C21D 9/08, C21D 9/10, C21D 9/12, C21D 9/14, B21D 26/02

(54) **VORRICHTUNG ZUR AUTOFRETTAGE**
DEVICE FOR AUTOFRETTAGE
DISPOSITIF D'AUTOFRETTAGE

(30) Priorität: 11.12.2009 DE 102009054558
(43) Veröffentlichungstag der Anmeldung: 17.10.2012
(73) Patentinhaber: Robert Bosch GmbH, 70442 Stuttgart (DE)
(72) Erfinder: MANZ, Stefan, 74424 Buehlertann (DE); RUECKAUF, Andreas, 71277 Rutesheim (DE); MARTIN, Oliver, 71638 Ludwigsburg (DE); VOLKERT, Hans, 70499 Stuttgart (DE); GRUPP, Clemens, 70173 Stuttgart (DE); BRAUN, Thomas, 71332 Waiblingen (DE)
(86) Internationale Anmeldenummer: PCT/EP2010/069163
(87) Internationale Veröffentlichungsnummer: WO 2011/070063

(56) Entgegenhaltungen:
- WO-A1-2008/058494
- DE-A1-102006 043 590
- DE-A1-102007 062 233
- DE-T2- 69 721 586
- GB-A- 2 466 641
- US-A1- 2004 040 636
- US-A1- 2009 084 255
- ALEGRE ET AL: "Fatigue behaviour of an autofrettaged high-pressure vessel for the food industry", ENGINEERING FAILURE ANALYSIS, PERGAMON, GB, Bd. 14, Nr. 2, 2. November 2006 (2006-11-02), Seiten 396-407, XP005847153, ISSN: 1350-6307, DOI: DOI:10.1016/J.ENGFAILANAL.2006.02.015

## Beschreibung

### Stand der Technik

Die vorliegende Erfindung betrifft eine Vorrichtung zur Autofrettage von Werkstücken.

Bei einem Autofrettage-Prozess wird eine Hydraulikflüssigkeit in Bohrungen oder Hohlräume eines Werkstücks unter sehr hohem Druck eingepresst, um Materialeigenspannungen in den Wänden des Werkstücks zu erzeugen. Die so behandelten Werkstücke kommen beispielsweise Common Rails in modernen Diesel-Einspritzsystemen zum Einsatz. Eine derartige Vorrichtung ist z. B. aus der DE 20 2006 017 613 U1 bekannt. Durch den hohen Druck des Autofrettage-Mediums im Prozess und die dadurch entstehenden Zugkräfte in den das Autofrettage-Medium umgebenden Zonen werden Materialbereiche des Werkstücks partiell plastisch verformt, was zur Ausbildung von Materialeigenspannungen im Werkstück führt. Dadurch wird eine Steigerung der Dauerfestigkeit der Werkstücke erreicht. Bei den bekannten Vorrichtungskonzepten müssen die hochdruckführenden Bauteile jedoch durch eine separate Sicherheitseinrichtung abgeschirmt werden, um eine Gefährdung des Bedienungspersonals im Berstfall auszuschließen.

Die WO 2008/058494 A1 beschreibt eine Autofrettagevorrichtung für dickwandige Werkstücke, bei der der Innenraum des Werkstückes mit einem Fluid gefüllt und axial druckfest verschlossen wird.

### Offenbarung der Erfindung

Die erfindungsgemäße Vorrichtung zur Autofrettage von Werkstücken mit den Merkmalen des Anspruchs 1 weist demgegenüber den Vorteil auf, dass sie ein umlaufend geschlossenes Gehäuse mit einer Innenseite zur Aufnahme des Werkstücks, mindestens ein Abdichtelement zum Verschließen einer Öffnung des Werkstücks und eine Zufuhreinheit zum Zuführen eines Autofrettage-Mediums in den Innenraum des Werkstücks aufweist, wobei das Abdichtelement an der Innenseite des Gehäuses angeordnet ist und einen bewegbaren Kolben zum Verschließen der Öffnung aufweist. Durch das umlaufend geschlossene Gehäuse wird ein wesentlich einfacherer und kompakterer Aufbau mit einer verbesserten Aufnahme der bei der Autofrettage von Werkstücken auftretenden Spannkräfte an der Gehäuseinnenseite realisiert. Außerdem wird durch die Anordnung der Abdichtungselemente an der Innenseite des Gehäuses eine effektive integrierte Sicherheitseinrichtung für den Berstfall bereitgestellt. Ferner kann der Aufbau der Vorrichtung sehr kostengünstig und kompakt sein, insbesondere wenn das umlaufend geschlossene Gehäuse vertikal stehend angeordnet ist.

Die Unteransprüche zeigen bevorzugte Weiterbildungen der Erfindung.

Gemäß einer bevorzugten Ausgestaltung der Erfindung weist das Gehäuse eine im Wesentlichen zylindrische Innenseite oder eine im Wesentlichen elliptische Innenseite oder eine im Wesentlichen polygonförmige Innenseite mit einer vorzugsweise geradzahligen Anzahl von Teilflächen auf. Dadurch können die Abdichtelemente auf einfache Weise an einer Vielzahl von radialen Positionen auf der Innenseite des Gehäuses entsprechend der Form des aufgenommenen Werkstücks angeordnet werden.

Gemäß einer bevorzugten Ausgestaltung der Erfindung weist die Autofrettagevorrichtung ferner mindestens ein Abstützelement auf, welches an der Innenseite des Gehäuses im Wesentlichen gegenüber dem Abdichtungselement angeordnet ist. Somit werden sämtliche radialen Abstütz- und Abdichtungskräfte, d. h. der resultierende Kraftfluss, durch das massive umlaufend geschlossene Gehäuse aufgenommen. Ferner werden eine Deformation des Gehäuses infolge der Spannkräfte minimiert sowie im Berstfall austretendes Autofrettage-Medium und Werkstücksplitter im Gehäuse aufgefangen.

Weiterhin bevorzugt sind das Abdichtelement und/oder das Abstützelement entlang der inneren Umfangsform und/oder in Axialrichtung des Gehäuses verstellbar. Hierdurch kann die Vorrichtung auf einfache Weise auf unterschiedliche Werkstücktypen mit abzudichtenden Öffnungen an beliebigen radialen und axialen Positionen angepasst werden. Dies trägt wesentlich zu einem erhöhten Durchsatz der Vorrichtung und kürzeren Umrüstzeiten bei. Weiterhin können dabei Abdichtelemente und Abstützelemente derart im Gehäuseinneren positioniert werden, dass sich Kräfte zumindest teilweise aufheben.

Ferner bevorzugt ist die Anzahl der Abstützelemente kleiner als die Anzahl der Abdichtelemente. Dadurch, dass ein Abstützelement die resultierenden Kräfte von mehr als einem Abdichtelement aufnehmen kann, sind eine Reduzierung der Bauteile und eine Reduzierung der Herstellkosten der Vorrichtung realisierbar.

In weiterer vorteilhafter Ausgestaltung der Erfindung umfasst das Gehäuse eine Vielzahl von Teilgehäusen, welche miteinander verbunden sind. Hierdurch kann das Gehäuse rasch und kostengünstig an unterschiedliche Werkstückformen und Größen angepasst werden. Das Gehäuse kann somit modulartig aufgebaut sein.

Vorzugsweise umfasst die Autofrettagevorrichtung einen Deckelring, welcher an einer Axialöffnung des Gehäuses angeordnet ist. Durch den Deckelring kann das umlaufend geschlossene Gehäuse auf der dem Boden gegenüberliegenden Seite auf einfache Weise und betriebssicher verschlossen werden. Das umlaufend geschlossene Gehäuse gewinnt dadurch weiter an Stabilität und es wird ein noch besserer Berstschutz bereitgestellt. Vorzugsweise weist der Deckelring eine kreisförmige mittige Öffnung auf.

Weiterhin bevorzugt weist die Vorrichtung eine im Gehäuse vorgesehene Öffnung zum Be- und Entladen der Vorrichtung auf, welche mittels eines Türelements verschließbar ist. Durch diese Öffnung im Gehäuse wird ein rasches manuelles oder automatisiertes Be- oder Entladen der Vorrichtung ermöglicht.

Gemäß einer bevorzugten Ausgestaltung der Erfindung weist die Vorrichtung ein Sichtfenster auf, welches im Gehäuse angeordnet ist. Hierdurch wird eine visuelle Überwachung des Autofrettageprozesses ermöglicht, die eine rasche Schadensermittlung im Berstfall und Leckagefall vor dem Öffnen des Gehäuses ermöglicht. Vorzugsweise ist das Sichtfenster in das Türelement integriert.

In weiterer vorteilhafter Ausgestaltung der Erfindung umfasst die Vorrichtung ein axiales Abdichtelement zum Verschließen einer Öffnung des Werkstücks. Durch das axiale Abdichtelement kann auf einfache Weise und betriebssicher eine in Axialrichtung des Gehäuses gerichtete Öffnung verschlossen werden.

Vorzugsweise weist jedes Abdichtelement einen eigenen Druckanschluss auf. Hierdurch ist eine im Wesentlichen beliebige axiale und radiale Positionierung jedes Abdichtelements realisierbar.

Weiterhin bevorzugt sind die Abstützelemente und/oder die Abdichtelemente austauschbar im Gehäuse angeordnet. Hierdurch können einzelne Abstützelemente und/oder Abdichtelemente bei einer Umrüstung der Vorrichtung einfacher demontiert oder montiert werden. Außerdem wird ein schneller und kostengünstiger Austausch defekter Bauteile ermöglicht.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine perspektivische Schnittansicht einer Autofrettagevorrichtung zur Autofrettage von Werkstücken gemäß einem ersten Ausführungsbeispiel der Erfindung,
- Figur 2: eine perspektivische Schnittansicht der Vorrichtung des ersten Ausführungsbeispiels mit einem nicht abgedichteten Werkstück,
- Figur 3: eine perspektivische Schnittansicht der Vorrichtung des ersten Ausführungsbeispiels mit abgedichtetem Werkstück,
- Figur 4: eine schematische horizontale Schnittansicht der Vorrichtung gemäß einem zweiten Ausführungsbeispiel, und
- Figur 5: eine schematische vertikale Schnittansicht der Vorrichtung des zweiten Ausführungsbeispiels.

### Ausführungsformen der Erfindung

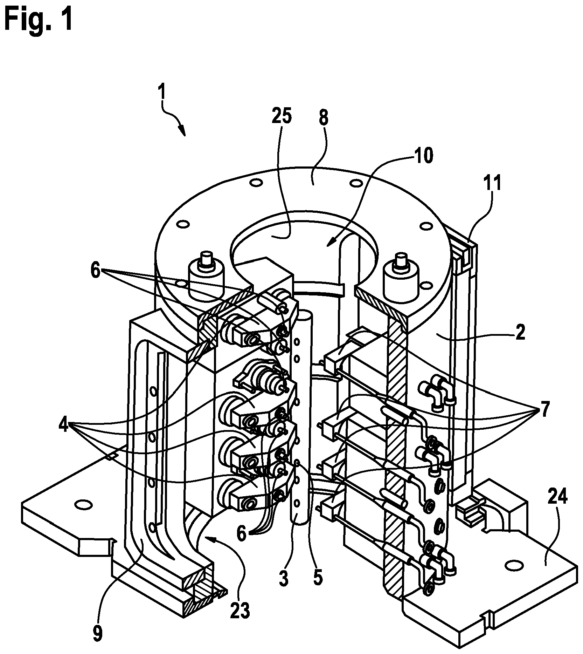

Nachfolgend wird unter Bezugnahme auf Figur 1 bis 3 eine Vorrichtung zur Autofrettage von Werkstücken gemäß einem ersten bevorzugten Ausführungsbeispiel der Erfindung im Detail beschrieben.

Figur 1 zeigt eine perspektivische Schnittansicht einer Autofrettagevorrichtung 1 zur Autofrettage von Werkstücken gemäß einem ersten Ausführungsbeispiel der Erfindung. Die Vorrichtung 1 weist ein vertikal stehendes, umlaufend geschlossenes Gehäuse 2 mit einer im Wesentlichen zylindrischen Innenseite 25 auf, welches auf einer Grundplatte 24 angeordnet ist. Die Grundplatte 24 bildet die Schnittstelle zwischen der Vorrichtung 1 und der restlichen Maschine. Erfindungsgemäß wird unter einer im Wesentlichen zylindrischen Innenseite eine Form verstanden, welche exakt zylindrisch oder leicht ovalförmig ist. Im Gehäuse 2 wird ein hier gestrichelt dargestelltes Werkstück 3 aufgenommen, welches an seinem Außenumfang eine Mehrzahl von Öffnungen aufweist, von denen eine beispielhaft mit dem Bezugszeichen 5 gekennzeichnet ist. Das Gehäuse 2 weist an seiner einem Bodenbereich 23 gegenüberliegenden Seite einen Deckelring 8 mit einer Öffnung 10 auf, welcher mit dem Gehäuse 2 verschraubt ist. Wie aus Figur 1 weiter ersichtlich, weist das Gehäuse 2 ferner ein Sichtfenster 11 und eine infolge der Schnittdarstellung nur teilweise sichtbare Öffnung 9 zum Be- und Entladen der Vorrichtung auf, die mittels eines hier nicht dargestellten Türelements verschließbar ist. Alternativ kann das Sichtfenster 11 auch im Türelement integriert sein. Durch das Sichtfenster 11 wird eine visuelle Überwachung des Autofrettageprozesses ermöglicht, die eine rasche Schadensermittlung im Berstfall und Leckagefall vor dem Öffnen des Gehäuses ermöglicht.

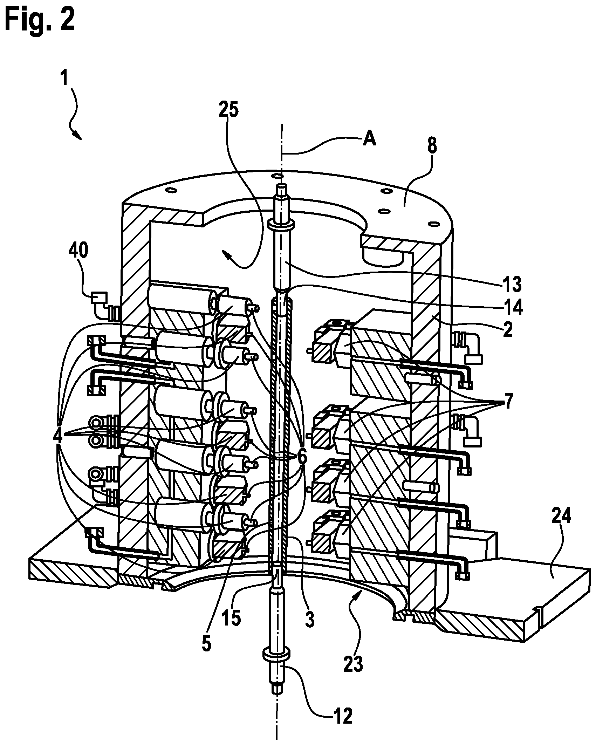

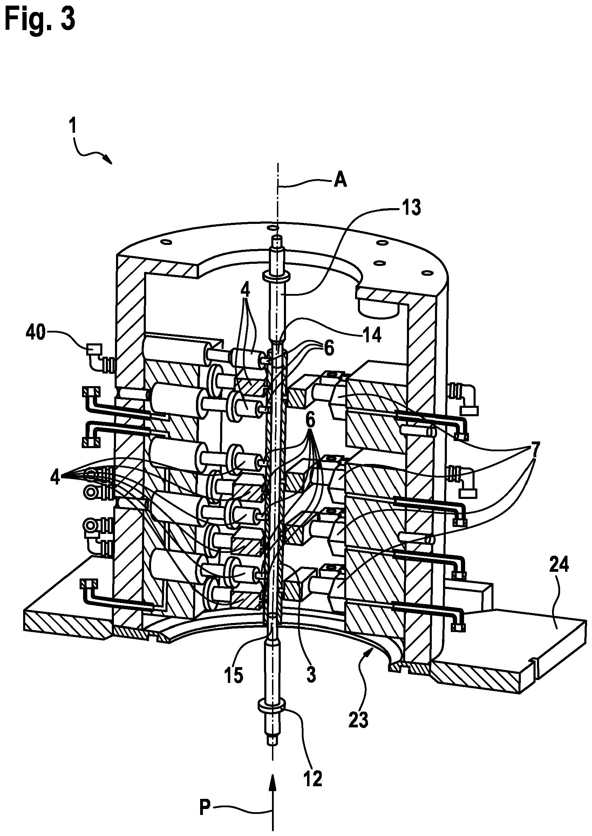

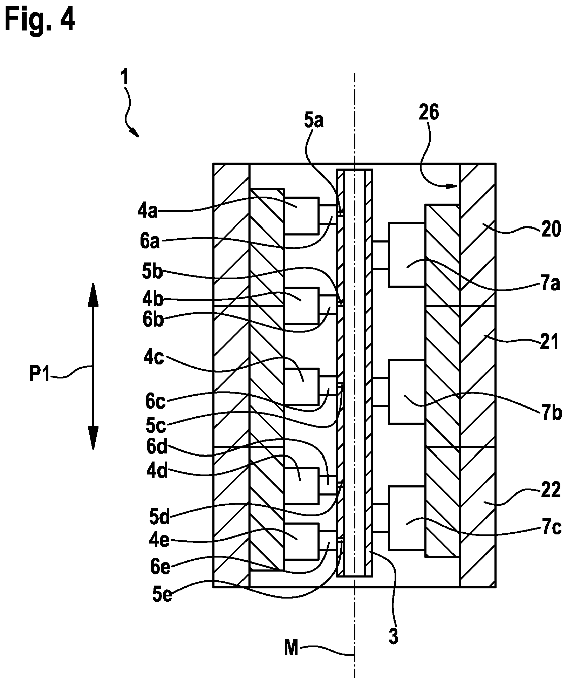

Auf einer Innenseite des Gehäuses 2 ist eine Mehrzahl von übereinander angeordneten Abdichtelementen 4 und eine Mehrzahl von Abstützelementen 7 angeordnet, die im Wesentlichen gegenüber den Abdichtelementen 4 positioniert sind. Jedes Abdichtelement 4 weist einen bewegbaren Kolben 6 zum Verschließen jeweils einer Öffnung 5 des Werkstücks 3 auf. Wie aus der Schnittdarstellung der Vorrichtung 1 von Figur 2 detaillierter ersichtlich, ist jedes Abdichtelement 4 hierbei entsprechend der axialen und radialen Position (siehe Figur 3 und 4) jeder Öffnung 5 des Werkstücks 3 im Gehäuse positioniert und justiert. Außerdem ist jedes Abdichtelement 4 mit einem eigenen Druckanschluss versehen, der in Figur 2 bei einem Abdichtelement 4 beispielhaft mit einem Bezugszeichen 40 gekennzeichnet ist. Wie aus Fig. 2 ferner ersichtlich, wird das Autofrettage-Medium dem Werkstück 3 über eine Zufuhreinheit 12 mit einer in Achsenrichtung A. gerichteten Mündungsöffnung 15 zugeführt. Auf der der Mündungsöffnung 15 gegenüberliegenden Seite ist eine Öffnung 14 des Werkstücks 3 durch ein axiales Abdichtelement 13 verschlossen. In Figur 2 ist die Vorrichtung 1 in einem Stadium des Autofrettageprozesses dargestellt, bei dem das Werkstück 3 nicht von den Abdichtelementen 4 abgedichtet und den Abstützelementen 7 abgestützt ist.

In Figur 3 zeigt die Autofrettagevorrichtung 1 im eingespannten Stadium des Werkstücks 3, bei dem der Kolben 6 jedes Abdichtelements 4 jeweils einer in dieser Darstellung nicht sichtbaren Öffnung 5 des Werkstücks 3 verschließt und das Autofrettage-Medium in Richtung eines Pfeils P über die Zufuhreinheit 12 in die Mündungsöffnung 15 des Werkstücks 3 zugeführt wird.

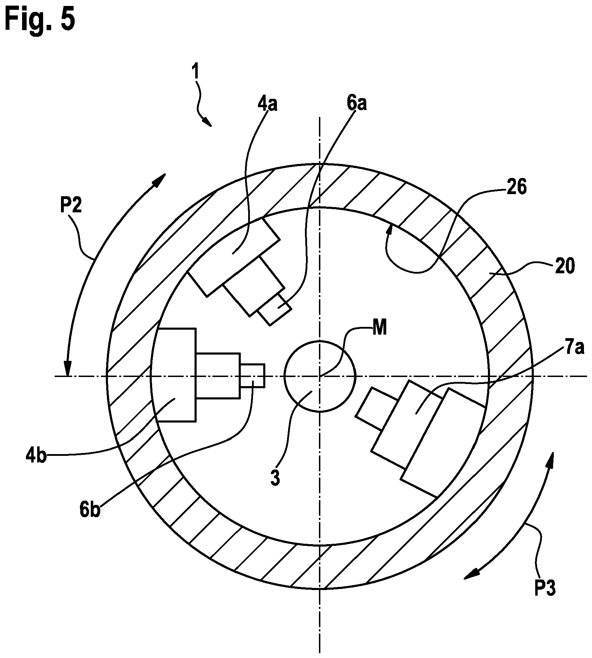

Nachfolgend wird unter Bezugnahme auf Figur 4 und 5 eine Autofrettagevorrichtung gemäß einem zweiten bevorzugten Ausführungsbeispiel der Erfindung im Detail beschrieben. Gleiche bzw. funktional gleiche Bauteile sind hier mit denselben Bezugszeichen wie im ersten Ausführungsbeispiel bezeichnet.

Im Gegensatz zum zuvor beschriebenen ersten Ausführungsbeispiel ist das Gehäuse beim zweiten Ausführungsbeispiel aus mehreren umlaufend geschlossenen Teilgehäusen 20, 21 und 22 mit einer zylindrischen Innenseite 26 modulartig zusammengesetzt. Alternativ kann das Gehäuse auch einstückig mit verschiedenen Höhen ausgebildet sein. Im Teilgehäuse 20 sind zwei Abdichtelemente 4a und 4b angeordnet, deren Kolben 6a bzw. 6b zwei Öffnungen 5a bzw. 5b des Werkstücks 3 abdichten, das von einem Abstützelement 7a abgestützt wird. Im Teilgehäuse 21 ist ein Abdichtelement 4c angeordnet, dessen Kolben 6c eine Öffnung 5c des Werkstücks abdichtet, das von einem Abstützelement 7b abgestützt wird. Im Teilgehäuse 22 sind zwei Abdichtelemente 4d und 4e angeordnet, deren Kolben 6d bzw. 6e zwei Öffnungen 5d bzw. 5e des Werkstücks 3 abdichten, das von einem Abstützelement 7c abgestützt wird.

Die Abdichtelemente 4a, 4b, 4c, 4d und 4e sind hierbei bezüglich einer Mittelachse M der Teilgehäuse 20, 21 und 22 in Richtung eines Doppelpfeils P1 auf der Innenseite 26 axial verstellbar, so dass eine Anpassung an beliebige axiale Positionen der Öffnungen 5a, 5b, 5c, 5d und 5e des Werkstücks 3 erfolgen kann. Wie aus Figur 4 weiter ersichtlich, stützt das Abstützelement 7a den resultierende Kraftfluss der Abdichtungselemente 4a und 4b auf das Werkstück 3 ab, während das Abstützelement 7c den resultierende Kraftfluss der Abdichtungselemente 4d und 4e auf das Werkstück 3 abstützt.

Wie aus Figur 5 ersichtlich, die einen vertikalen Schnitt durch das Teilgehäuse 20 zeigt, sind die Abdichtelemente 4a und 4b in Bezug auf die Mittelachse M in Richtung eines Doppelpfeils P2 auf der Innenseite 26 radial verstellbar, sodass auch eine Anpassung an beliebige radiale Positionen von Werkstücköffnungen möglich ist. Das Abstützelement 7a, das in Richtung eines Doppelpfeils P3 radial verstellbar ist, ist hierbei so positioniert, dass der auf das Werkstück 3 einwirkende resultierende Kraftfluss der mit einem Winkelversatz von ca. 45° angeordneten Abdichtelemente 4a und 4b aufgenommen und abgestützt wird. Dadurch das die Abdichtelemente 4 und/oder die Abstützelemente 7 austauschbar und sowohl axial als auch radial verstellbar auf der Innenseite des Gehäuses bzw. der Teilgehäuse der Vorrichtung angeordnet sind, kann die Vorrichtung zur Autofrettage unterschiedlichster Werkstücktypen mit beliebigen axialen und radialen Öffnungspositionen sowie differierenden Öffnungsdurchmessern auf einfache Weise angepasst und eingesetzt werden. Die erfindungsgemäße Autofrettagevorrichtung minimiert die für den Autofrettageprozess erforderliche Anzahl von bewegten Bauteilen und beschränkt den Kraftfluss auf wenige Bauteile im Inneren der Vorrichtung. Aufgrund des umlaufend geschlossenen Gehäuses der Vorrichtung ist keine zusätzliche Sicherheitseinrichtung für den Berstfall erforderlich.

## Patentansprüche

1. Autofrettagevorrichtung zur Autofrettage von Werkstücken (3), umfassend:
- ein umlaufend geschlossenes Gehäuse (2) zur Aufnahme des Werkstücks (3), wobei das Gehäuse (2) eine Innenseite (25) aufweist,
- mindestens ein Abdichtelement (4) zum Verschließen einer Öffnung (5) des Werkstücks (3), und
- eine Zufuhreinheit (12) zum Zuführen eines Autofrettage-Mediums in einen Innenraum des Werkstücks (3),
wobei das Abdichtelement (4) an der Innenseite (25) des Gehäuses (2) angeordnet ist und einen bewegbaren Kolben (6) zum Verschließen der Öffnung (5) aufweist.

2. Autofrettagevorrichtung nach Anspruch 1, wobei das Gehäuse (2) eine im Wesentlichen zylindrische Innenseite (25) oder eine im Wesentlichen elliptische Innenseite oder eine im Wesentlichen polygonförmige Innenseite aufweist.

3. Autofrettagevorrichtung nach einem der vorhergehenden Ansprüche, ferner umfassend mindestens ein Abstützelement (7), welches an der Innenseite (25) des Gehäuses (2) im Wesentlichen gegenüber dem Abdichtelement (4) angeordnet ist.

4. Autofrettagevorrichtung nach einem der vorhergehenden Ansprüche, **dadurch gekennzeichnet, dass** das Abdichtelement (4) und/oder das Abstützelement (7) entlang des Umfangs und/oder in Axialrichtung des Gehäuses (2) verstellbar sind.

5. Autofrettagevorrichtung nach einem der vorhergehenden Ansprüche, **dadurch gekennzeichnet, dass** die Anzahl der Abstützelemente (4) kleiner als die Anzahl der Abdichtelemente (7) ist.

6. Autofrettagevorrichtung nach einem der vorhergehenden Ansprüche, **dadurch gekennzeichnet, dass** das Gehäuse (2) eine Vielzahl von Teilgehäusen (20, 21, 22) umfasst, welche miteinander verbunden sind.

7. Autofrettagevorrichtung nach einem der vorhergehenden Ansprüche, ferner umfassend einen Deckelring (8), welcher an einer Axialöffnung (10) des Gehäuses (2) angeordnet ist.

8. Autofrettagevorrichtung nach einem der vorhergehenden Ansprüche, **gekennzeichnet durch** eine im Gehäuse (2) angeordnete Öffnung (9) zum Be- und Entladen der Vorrichtung, welche mittels eines Türelements verschließbar ist.

9. Autofrettagevorrichtung nach einem der vorhergehenden Ansprüche, ferner umfassend ein axiales Abdichtelement (13) zum Verschließen einer Öffnung (14) des Werkstücks (3).

10. Autofrettagevorrichtung nach einem der vorhergehenden Ansprüche, **dadurch gekennzeichnet, dass** jedes Abdichtelement (4; 13) einen eigenen Druckanschluss (40) aufweist.

11. Autofrettagevorrichtung nach einem der vorhergehenden Ansprüche, **dadurch gekennzeichnet, dass** die Abstützelemente (7) und/oder die Abdichtelemente (4) austauschbar im Gehäuse (2) angeordnet sind.

## Claims

1. Autofrettage device for the autofrettage of workpieces (3), comprising:
- a housing (2) that is enclosed in an encircling manner for receiving the workpiece (3), wherein the housing (2) has an internal side (25);
- at least one sealing element (4) for closing and opening (5) of the workpiece (3); and
- an infeed unit (12) for feeding an autofrettage medium into an interior of the workpiece (3),
wherein the sealing element (4) is disposed on the internal side (25) of the housing (2) and has a movable piston (6) for closing the opening (5).

2. Autofrettage device according to Claim 1, wherein the housing (2) has a substantially cylindrical internal side (25), or a substantially elliptic internal side, or a substantially polygonal internal side.

3. Autofrettage device according to one of the preceding claims, furthermore comprising at least one support element (7) which is disposed on the internal side (25) of the housing (2) so as to be substantially opposite the sealing element (4).

4. Autofrettage device according to one of the preceding claims, **characterized in that** the sealing element (4) and/or the support element (7) are adjustable along the circumference and/or in the axial direction of the housing (2).

5. Autofrettage device according to one of the preceding claims, **characterized in that** the number of support elements (4) is smaller than the number of sealing elements (7).

6. Autofrettage device according to one of the preceding claims, **characterized in that** the housing (2) comprises a multiplicity of part-housings (20, 21, 22) which are connected to one another.

7. Autofrettage device according to one of the preceding claims, furthermore comprising a cover ring (8) which is disposed on an axial opening (10) of the housing (2).

8. Autofrettage device according to one of the preceding claims, **characterized by** an opening (9) for loading and unloading the device, said opening being disposed in the housing (2) and being closable by means of a door element.

9. Autofrettage device as claimed in one of the preceding claims, furthermore comprising an axial sealing element (13) for closing an opening (14) of the workpiece (3).

10. Autofrettage device according to one of the preceding claims, **characterized in that** each sealing element (4; 13) has a dedicated pressurized connector (40).

11. Autofrettage device according to one of the preceding claims, **characterized in that** the support elements (7) and/or the sealing elements (4) are disposed so as to be replaceable in the housing (2).

## Revendications

1. Dispositif d'auto-frettage pour l'auto-frettage de pièces (3), comprenant :
- un boîtier fermé sur sa périphérie (2), pour recevoir la pièce (3), le boîtier (2) présentant un côté intérieur (25),
- au moins un élément d'étanchéité (4) pour fermer une ouverture (5) de la pièce (3), et
- une unité d'alimentation (12) pour l'alimentation d'un milieu d'auto-frettage dans un espace interne de la pièce (3),
l'élément d'étanchéité (4) étant disposé sur le côté intérieur (25) du boîtier (2) et présentant un piston déplaçable (6) pour fermer l'ouverture (5) .

2. Dispositif d'auto-frettage selon la revendication 1, dans lequel le boîtier (2) présente un côté intérieur essentiellement cylindrique (25) ou un côté intérieur essentiellement elliptique ou un côté intérieur de forme essentiellement polygonale.

3. Dispositif d'auto-frettage selon l'une quelconque des revendications précédentes, comprenant en outre au moins un élément de support (7), qui est disposé au niveau du côté intérieur (25) du boîtier (2) essentiellement à l'opposé de l'élément d'étanchéité (4).

4. Dispositif d'auto-frettage selon l'une quelconque des revendications précédentes, **caractérisé en ce que** l'élément d'étanchéité (4) et/ou l'élément de support (7) peuvent être déplacés le long de la périphérie et/ou dans la direction axiale du boîtier (2).

5. Dispositif d'auto-frettage selon l'une quelconque des revendications précédentes, **caractérisé en ce que** le nombre des éléments de support (4) est inférieur au nombre des éléments d'étanchéité (7).

6. Dispositif d'auto-frettage selon l'une quelconque des revendications précédentes, **caractérisé en ce que** le boîtier (2) comprend une pluralité de boîtiers partiels (20, 21, 22) qui sont connectés les uns aux autres.

7. Dispositif d'auto-frettage selon l'une quelconque des revendications précédentes, comprenant en outre une bague de recouvrement (8) qui est disposée au niveau d'une ouverture axiale (10) du boîtier (2).

8. Dispositif d'auto-frettage selon l'une quelconque des revendications précédentes, **caractérisé par** une ouverture (9) disposée dans le boîtier (2) pour le chargement et le déchargement du dispositif, qui peut être fermée au moyen d'un élément de porte.

9. Dispositif d'auto-frettage selon l'une quelconque des revendications précédentes, comprenant en outre un élément d'étanchéité axial (13) pour fermer une ouverture (14) de la pièce (3).

10. Dispositif d'auto-frettage selon l'une quelconque des revendications précédentes, **caractérisé en ce que** chaque élément d'étanchéité (4 ; 13) présente un raccord de pression (40).

11. Dispositif d'auto-frettage selon l'une quelconque des revendications précédentes, **caractérisé en ce que** les éléments de support (7) et/ou les éléments d'étanchéité (4) sont disposés de manière remplaçable dans le boîtier (2).
